# EUROPEAN PATENT APPLICATION

(11) **EP 4 674 666 A1**
(43) Date of publication of application: **07.01.2026**
(21) Application number: 24223317.9
(22) Date of filing: 26.12.2024
(51) Int. Cl.: B60L 1/00, B60L 58/10

(54) **POWER DISTRIBUTION MANAGEMENT INTEGRATED ASSEMBLY OF BATTERY SYSTEM, BATTERY PACK, AND AUTOMOBILE**

(30) Priority: 01.07.2024 CN 202410875132
(71) Applicant: Zhejiang Leapenergy Technology Co., Ltd., Hangzhou, Zhejiang 310000 (CN); Zhejiang Leapmotor Technology Co., Ltd, Hangzhou, Zhejiang 310051 (CN)
(72) Inventor: XIA, Zhenqiang, Hangzhou (CN); LI, Shuai, Hangzhou (CN); HUA, Xianwei, Hangzhou (CN); CHEN, Yuanjie, Hangzhou (CN)
(74) Representative: Herrero & Asociados, S.L.

(57) **Abstract**

A power distribution management integrated assembly of a battery system, a battery pack, and an automobile are provided and include a structure assembly (10), including a base (11) and a copper bar component (12); an electrical assembly (20), including a fast charging relay assembly (21), a main relay assembly (22), and a fuse (23) all arranged on the base (11) and all electrically connected to the copper bar component (12); and a hardware circuit assembly (30), including a control plate (31), a sampling component (32), a pre-charging resistor (33), and a pre-charging relay (34), the control plate (31) being arranged on the base (11), and the pre-charging resistor (33) and pre-charging relay (34) being integrated on the control plate (31), the fast charging relay assembly (21), main relay assembly (22), and fuse (23) being all electrically connected to the control plate (31).

## Description

### TECHNICAL FIELD

The present application relates to the field of new energy automobile technologies, in particularly to a power distribution management integrated assembly of a battery system, a battery pack, and an automobile.

### BACKGROUND

A power battery is a core component of a new energy automobile, and includes a power distribution module and a battery system management (BMS) module. The power distribution module includes electrical components such as a relay, a fuse, a shunt, and a pre-charging resistor, etc. The electrical components are assembled together through an upper housing and a lower housing to control charging and discharging of a main circuit of the battery pack. The BMS module includes electronic circuits such as a hardware circuit such as a hardware circuit, a battery monitoring unit (BMU) (i.e., a sampling unit), a micro control unit (MCU) (i.e., a motor control unit), and various communication units. The BMS module is a brain of the entire battery system, responsible for communication of the automobile and monitoring a state of the battery pack.

In the related art, the power distribution module and BMS module are two separate units, and are electrically connected to each other through a wiring harness. The complex components and the wire harness connection cause difficulty of automated assembly of a production line, thereby resulting in low production efficiency. When the two components are assembled together, the volume of the assembled component is too large to adapt to different battery packs.

### SUMMARY

In view of the above problems, it is necessary to provide a power distribution management integrated assembly of a battery system, a battery pack, and an automobile, which has small volume and can be assembled automatically.

A power distribution management integrated assembly of a battery system is provided and includes a structure assembly, an electrical assembly, and a hardware circuit assembly. The structure assembly includes a base and a copper bar component. The electrical assembly includes a fast charging relay assembly, a main relay assembly, and a fuse. The fast charging relay assembly, the main relay assembly, and the fuse are arranged on the base and all electrically connected to the copper bar component. The hardware circuit assembly includes a control plate, a sampling component, a pre-charging resistor, and a pre-charging relay. The control plate is arranged on the base, and the pre-charging resistor and pre-charging relay are integrated on the control plate. The fast charging relay assembly, main relay assembly, and fuse are all electrically connected to the control plate.

In some embodiments, the structure assembly includes a connector, and the fast charging relay assembly, the main relay assembly, and the fuse are electrically connected to the control plate through the connector.

In some embodiments, in a height direction, the control plate is located above the electrical assembly, and both the fast charging relay assembly and the main relay assembly are horizontal relays.

In some embodiments, the fast charging relay assembly includes a fast charging positive relay and a fast charging negative relay; the main relay assembly includes a main positive relay and a main negative relay; a coil pin is arranged on one end of each of the fast charging positive relay, the fast charging negative relay, the main positive relay, and the main negative relay close to the control plate, and the coil pin is electrically connected to the control plate through the connector.

In some embodiments, the electrical assembly includes a shunt, and the shunt is electrically connected to the copper bar and the control plate; a connection point between the fast charging relay assembly and the copper bar component, a connection point between the main relay assembly and the copper bar component, a connection point between the fuse and the copper bar component, and a connection point between the shunt and the copper bar component are all located on one end of the base.

In some embodiments, the copper bar component includes a first connection bar, a second connection bar, a third connection bar, a fourth connection bar, and a fifth connection bar; the fuse is connected to the first connection bar, a positive electrode connection point of a battery pack is arranged on the first connection bar, the fuse and the main positive relay are both connected to the second connection bar, the fast charging positive relay is connected to the third connection bar, the main positive relay is connected to the fourth terminal block, and the main negative relay is connected to the fifth connection bar block.

In some embodiments, the copper bar component includes a sixth connection bar, the shunt and the main negative relay are connected to the sixth connection bar, and a negative connection point of the battery pack is arranged on the sixth connection bar.

In some embodiments, the copper bar component includes a seventh connection bar (127) connected to the fourth connection bar, a branch connection point is arranged on the seventh connection bar, and the seventh connection bar is embedded on the base.

In some embodiments, a positive connection point of a rear motor and a positive connection point of a range extender are arranged on the fourth connection bar, and the positive connection point of the rear motor is arranged on one side of the main positive relay, and the positive connection point of the range extender are arranged on the another side opposite to the one side of the main positive relay; a negative connection point of the rear motor and a negative connection point of the range extender are arranged on the fifth connection bar, and the negative connection point of the rear motor is arranged on one side of the main negative relay, and the negative connection point of the range extender is arranged on another side opposite to the one side of the main negative relay.

In some embodiments, a mounting structure is arranged on the base, and is configured to mount the control plate.

In some embodiments, the mounting structure includes an mounting column and an mounting plate, the mounting plate is located above the base, and the control plate is arranged on the mounting plate, one end of the mounting column is connected to the base, and the other end of the mounting column is connected to the mounting plate.

In some embodiments, the mounting structure includes a metal layer, and the metal layer is arranged on a periphery of the mounting plate.

In some embodiments, the structure assembly includes a shell component, and the shell component covers the control plate.

In some embodiments, long a height direction, a protrusion platform is arranged on the shell component and protrudes from the shell component, and the protrusion platform is arranged corresponding to the pre-charging resistor and the pre-charging relay.

In some embodiments, the connector includes an end base and a support leg, the support leg is configured to be connected to electrical components, the support leg is connected to the end base, and the end base is connected to the control plate.

In some embodiments, the support leg is connected to the end base in a plug-in manner, and at least a part of the support leg is a deformable structure.

A battery pack is provided and includes any one of the power distribution management integrated assemblies of the battery systems mentioned above.

An automobile is provided and includes any one of the power distribution management integrated assemblies of the battery systems mentioned above.

Compared with the related art, the power distribution management integrated assembly of the battery system integrates the power distribution module and the BMS module together, the pre-charging resistor and pre-charging relay are integrated on the control plate, and various electrical components and the control plate are integrated on the base, thereby achieving a high-degree integration between the power distribution module and the BMS module. The small integrated volume reduces the space limitation of the management module, and can adapt to different types of battery packs or battery systems. Since the high-degree integration, no wiring harness is configured to connect electrical components to the control plate. In addition, the connection between the electrical components is achieved through the copper bar component, such that wire harness connection is greatly reduced, thereby lowering costs, and facilitating automated assembly operations. In this way, the integrated management module can be assembled automatically on the production line, thereby greatly improving production efficiency.

### BRIEF DESCRIPTION OF THE DRAWINGS

In order to make the technical solutions described in embodiments of the present disclosure or the related art more clearly, the drawings used for description of some embodiments or the related art are described. Apparently, the drawings in the following description only illustrate some embodiments of the present disclosure. For those skilled in the art, other drawings may be acquired according to the drawings without any creative work.
FIG. 1 is a structural schematic view of a power distribution management integrated assembly of a battery system according to some embodiments of the present disclosure.
FIG. 2 is a structural schematic view of a part of the structure in FIG. 1 without a shell component.
FIG. 3 is a structural schematic view of a part of the structure in FIG. 2 without a hardware circuit assembly and a connector.
FIG. 4 is a structural schematic view of a connector according to some embodiments of the present disclosure.
FIG. 5 is a top view of a hardware circuit assembly according to some embodiments of the present disclosure.
FIG. 6 is a bottom view of a hardware circuit assembly according to some embodiments of the present disclosure.
FIG. 7 is a structural schematic view of a copper bar component according to some embodiments of the present disclosure.
FIG. 8 is a structural schematic view of an assembly of a copper bar component and a base according to some embodiments of the present disclosure.
FIG. 9 is a structural schematic view of an assembly of a mounting structure and a base according to some embodiments of the present disclosure.
FIG. 10 is a front view of FIG. 9.
FIG. 11 is a top view of FIG. 9.

Reference number: 10. Structure assembly; 20. Electrical assembly; 21. Fast charging relay assembly; 211. Fast charging positive relay; 212. Fast charging negative relay; 22. Main relay assembly; 221. Main positive relay; 222. Main negative relay; 23. Fuse; 24. Shunt; 25. Coil pin; 30. Hardware circuit assembly; 31. Control plate; 32. Sampling component; 33. Pre-charging resistor; 34. Pre-charging relay; 40. Connector; 41. End base; 411. Bending portion; 42. Support leg; 421. Through hole; 11. Base; 12. Copper bar component; 121. First connection bar; 121a. Positive electrode connection point of a battery pack; 122. Second connection bar; 123. Third connection bar; 124. Fourth connection bar; 124a. First plate body; 124b. Second plate body; 124c. Positive connection point of a rear motor; 124d. Positive connection point of a range extender; 125. Fifth connection bar; 125a. Third plate body; 125b. Fourth plate body; 125c. Negative connection point of the rear motor; 125d. Negative connection point of the range extender; 126. Sixth connection bar; 126a. Negative connection point of the battery pack; 127. Seventh connection bar; 127a. Branch connection point; 13. Mounting structure; 131. Mounting column; 132. Mounting plate; 133. Opening; 134. Hook column; 135. Metal layer; 14. Shell component; 141. Protrusion platform.

### DETAILED DESCRIPTIONS

In order to make the above objectives, features, and technical effects of the present disclosure understandable, some embodiments of the present disclosure are described in detail in conjunction with the drawings. Many details are described in the following description to facilitate a thorough understanding of the present disclosure. However, the present disclosure can be implemented in many ways different from ways described herein, and those skilled in the art can make similar improvements without departing from the scope of the present disclosure. Therefore, the present disclosure is not limited by the embodiments disclosed below.

It should be noted that when one assembly is described as "fixed to" or "arranged on" another assembly, the one assembly may be directly arranged on the other assembly or there may be a further another assembly arranged between the one assembly and the another assembly. When the one assembly is described as "connected to" the another assembly, the one assembly may be directly connected to the other assembly or there may be a still another assembly connected to the one assembly and the another assembly. The terms "vertical", "horizontal", "above", "below", "left", "right" and other similar terms used in the specification of the present disclosure are for description purposes only and do not represent the only implementation method.

In addition, the terms "first" and "second" are only used for description purposes and cannot be understood as indicating or implying relative importance or implicitly indicating the number of technical features indicated. Thus, features defined as "first" and "second" may explicitly or implicitly include at least one of the features. In the description of the present disclosure, the term "multiple" means at least two, such as two, or three, etc., unless otherwise specifically defined.

In the present disclosure, unless otherwise specified and limited, "a first feature arranged above or below a second feature" may indicate that the first feature directly contact the second feature, or the first feature indirectly contact the second feature through an intermediate medium. Moreover, "the first feature being above the second feature" may indicate that the first feature is located directly above or diagonally above the second feature, or may indicate that the first feature is horizontally higher than the second feature. "The first feature being below the second feature" may indicate the first feature is located directly below or diagonally below the second feature, or may indicate that the first feature is horizontally lower than the second feature.

Unless otherwise defined, all technical terms and scientific terms used in the specification of the present disclosure have the same meanings as those commonly understood by those skilled in the art. The terms used in the specification of the present disclosure are only for the purpose of describing embodiments and are not intended to limit the scope of the present disclosure. The term "and/or" used in the specification of the present disclosure includes any and all combinations of one or more related listed items.

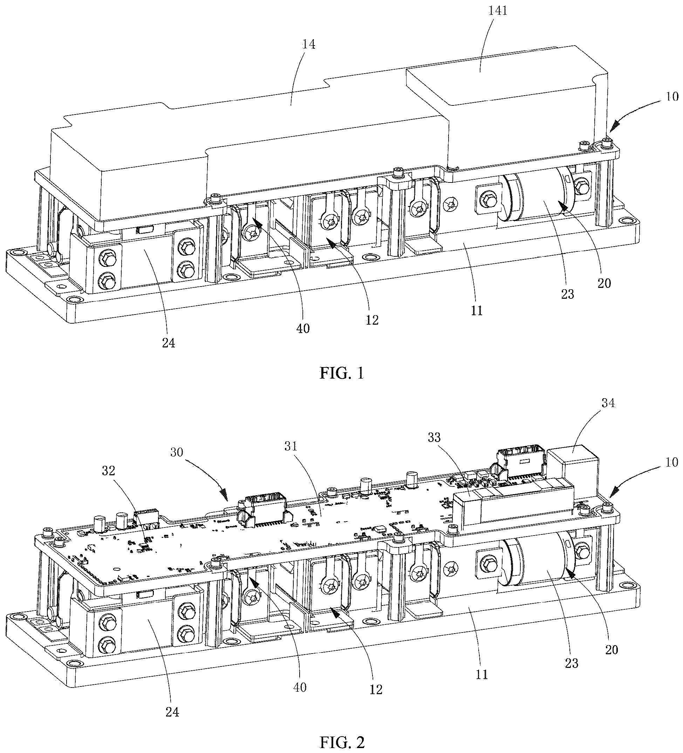

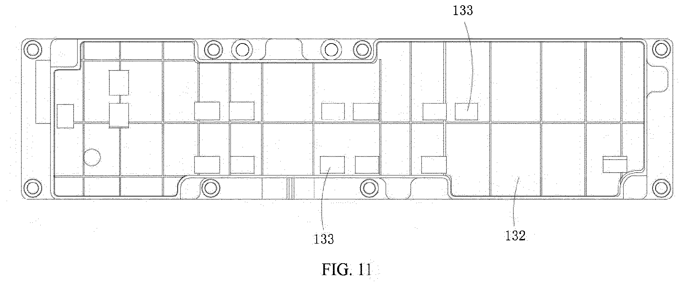

As shown in FIGS. 1-11, some embodiments of the present disclosure provide a power distribution management integrated assembly of a battery system, and the integrated module includes a structure assembly 10, an electrical assembly 20, and a hardware circuit assembly 30. The structure assembly 10 includes a base 11 and a copper bar component 12. The electrical assembly 20 includes a fast charging relay assembly 21, a main relay assembly 22, and a fuse 23. The fast charging relay assembly 21, the main relay assembly 22, and the fuse 23 are arranged on the base 11 and electrically connected to the copper bar component 12. The hardware circuit assembly 30 includes a control plate 31, a sampling component 32, a pre-charging resistor 33, and a pre-charging relay 34. The fast charging relay assembly 21, the main relay assembly 22, and the fuse 23 are all electrically connected to the control plate 31.

In some embodiments, the control plate 31 is arranged on the base 11, and the pre-charging resistor 33 and pre-charging relay 34 are integrated on the control plate 31. The pre-charging resistor 33 and pre-charging relay 34 may be integrated on the control plate 31 through welding, or bonding, etc. In this embodiment, welding is used, such that wire harness connection is reduced, and quality consistency is improved.

In the present disclosure, the BMS system module and the power distribution module are highly integrated, a pre-charging circuit, a control circuit, and chip sampling are achieved through the hardware circuit assembly 30, and the hardware circuit and the electrical components are connected to each other, thereby achieving functions such as charging and discharging control, state monitoring, fault diagnosis, and automobile communication for the battery system. Since no wire harness is achieved in the entire unit, automated assembly may be achieved, thereby reducing quality problem caused by inconsistent production processes.

In some embodiments, a position relationship between the control plate 31 and the electrical assembly 20 is above-below arrangement, that is, along a height direction, the control plate 31 is located above the electrical assembly 20. Therefore, the electrical assembly 20 is arranged in an area between the base 11 and the control plate 31, which only adds a small volume compared with a separate BMS system module or a separate power distribution module, and the overall integration is more compact. Besides, the control plate 31 may be adjacent to the electrical assembly 20, or the control plate 31 and the electrical assembly 20 are arranged in a front-rear position relationship, or the control plate 31 and the electrical assembly 20 may be arranged in other position relationship, as long as the compact arrangement may be achieved.

In some embodiments, both the fast charging relay assembly 21 and the main relay assembly 22 are horizontal relays. The horizontal relay here means that the relay is placed to be lied, and an electrode face a side direction, that is, the electrode is arranged on the copper bar component 12. In this way, the height of the relay is reduced, thereby reducing the height of the integrated module to reduce the volume of the integrated module.

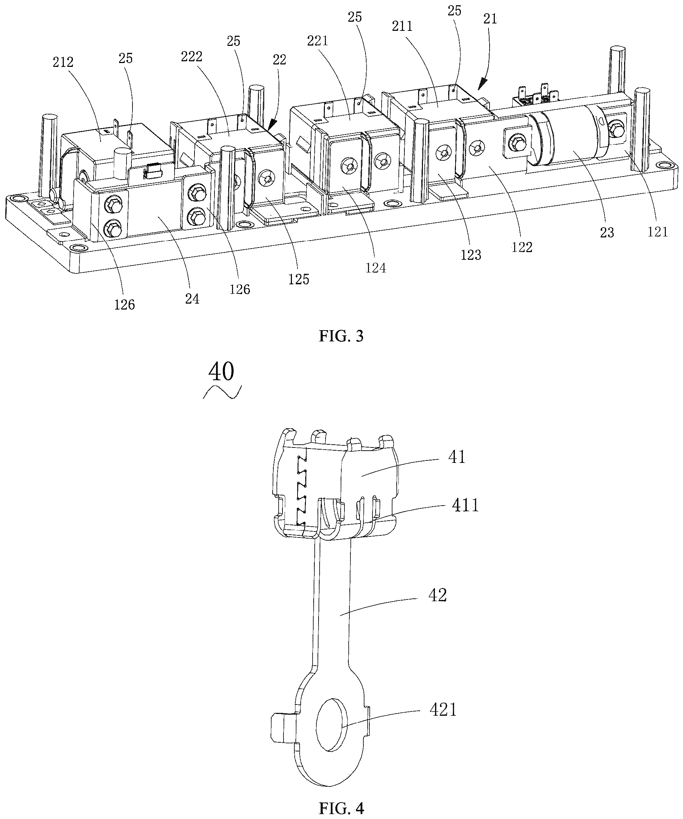

As shown in FIG. 3, the fast charging relay assembly 21 includes a fast charging positive relay 211 and a fast charging negative relay 212. The main relay assembly 22 includes a main positive relay 221 and a main negative relay 222. The fast charging positive relay 211, the fast charging negative relay 212, the main positive relay 221, and the main negative relay 222 are all placed to be lied, and a coil pin 25 is arranged on the end of each of the fast charging positive relay 211, fast charging negative relay 212, main positive relay 221, and main negative relay 222 close to the control plate 31. Therefore, in the horizontal state, the relay and control plate 31 are connected to each other in the shortest distance, thereby improving compactness and avoiding wire harness connection.

As shown in FIGS. 1 and 4-6, the structure assembly 10 includes a connector 40. The fast charging relay assembly 21, the main relay assembly 22, and the fuse 23 are electrically connected to the control plate 31 through the connector 40. The coil pin 25 is electrically connected to the control plate 31 through connector 40. In some embodiments, the connector 40 includes an end base 41 and a support leg 42. The support leg 42 is configured to be connected to electrical components and is connected to the end base 41, and the end base 41 is connected to the control plate 31. The connector 40 achieves a complete no wireless harness, and rigidly limits positions of the electrical components, thereby effectively improving the stable connection of the electrical components. The support leg 42 is connected to the end base 41 in a plug-in manner, and at least a part of the support leg 42 is a deformable structure. The plug-in manner is easy to assemble, and the processing is convenient. The support leg 42 may be elastically deformed to adapt to the working environment of the automobile, such that small positional change between the relay and the control plate 31 is allowed, making the electrical connection between the relay and the control plate 31 stable and difficult to damage.

In some embodiments, the end base 41 may be fixedly connected to the lower surface of the control plate 31 through welding, plugging, and other methods. The top end of the support leg 42 is plugged into the end base 41, and the bottom end of the support leg 42 defines a through hole 421 and may be connected to electrical components through bolts or other connection components. The end base 41 may be made of copper or iron, and has a conductive effect. The end base 41 has two sheet-shaped bending portion 411, and the two sheet-shaped bending portion 411 abut against each other to form a socket for the insertion of the support leg 42. In this embodiment, the entire support leg 42 is a deformable structure, that is, the support leg 42 is a sheet-shaped structure made of metal, such as copper, or iron, etc., which may conductive and deformable. Besides, in other embodiments, a part of the support leg 42 may be made of conductive material that is non-deformable, and the other part of the support leg 42 may be made of conductive material that is deformable.

In some embodiments, the electrical assembly 20 includes a shunt 24, and the shunt 24 is electrically connected to the copper bar component 12 and the control plate 31. In some embodiments, a connection point between the fast charging relay assembly 21 and the copper bar component 12, a connection point between the main relay assembly 22 and the copper bar component 12, a connection point between the fuse 23 and the copper bar component 12, and a connection point between the shunt 24 and the copper bar component 12 are all located on one end of the base 11, thereby improving the heat dissipation capability of the electrical components, and avoiding the electromagnetic compatibility (EMC) impact of the high-voltage circuit on the hardware circuits. In addition, during the automated assembly process of the production line, a production line testing probe may synchronously contact the copper bar component 12 to achieve automated impedance testing.

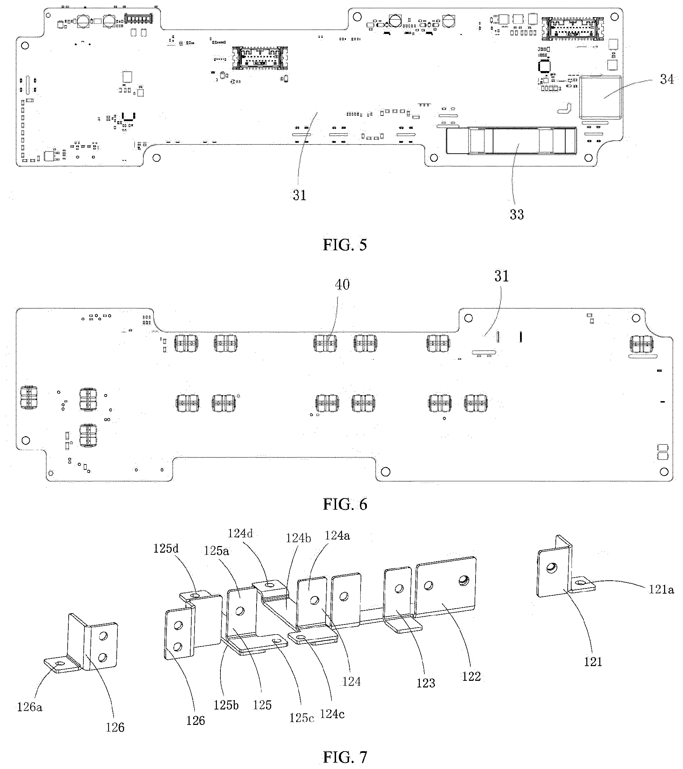

As shown in FIGS. 3 and 7, the copper bar component 12 includes a first connection bar 121, a second connection bar 122, a third connection bar 123, a fourth connection bar 124, and a fifth connection bar 125. The fuse 23 is connected to the first connection bar 121, and a positive electrode connection point 121a of the battery pack is arranged on the first connection bar 121. The fuse 23 and main positive relay 221 are both connected to the second connection bar 122, the fast charging positive relay 211 is connected to the third connection bar 123, the main positive relay 221 is connected to the fourth connection bar 124, and the main negative relay 222 is connected to the fifth connection bar 125. In some embodiments, the copper bar component 12 includes a sixth connection bar 126, the shunt 24 and main negative relay 222 are both connected to the sixth connection bar 126, and a negative connection point 126a of the battery pack is arranged on the sixth connection bar 126.

In this embodiment, the distribution positions of the fast charging positive relay 211, the fast charging negative relay 212, the main positive relay 221, the main negative relay 222, the fuse 23, and the shunt 24 on the base 11 are as follows. The fuse 23 is located on one end of the base 11 and below the pre-charging resistor 33, and the pre-charging resistor 33 is arranged on the control plate 31. Along a direction from one end of base 11 where the fuse 23 is located to the other end of base 11, the fast charging positive relay 211, the main positive relay 221, the main negative relay 222, the shunt 24, and the fast charging positive relay 211 are arranged in sequence. One of contact blades of the fuse 23 is connected to the first connection bar 121, and the other contact blade of the fuse 23 is connected to the second connection bar 122. One electrode of fast charging positive relay 211 is connected to the second connection bar 122, and the other electrode of fast charging positive relay 211 is connected to the third connection bar 123. One electrode of the main positive relay 221 is connected to the second connection bar 122, and the other electrode of the main positive relay 221 is connected to the fourth connection bar 124. One electrode of the main negative relay 222 is connected to the fifth connection bar 125, the other electrode of the main negative relay 222 is connected to the sixth connection bar 126. The shunt 24 is connected to the sixth connection bar 126. The distribution of the electrical components in this way results in most reasonable structural utilization and least copper bar components 12, thereby effectively reducing costs and improving compactness. The connection methods mentioned above may be welding, or screwing, etc. In this embodiment, screwing is used for easy processing, testing, repairing, and replacement. In some embodiments, a position where the support leg 42 of connector 40 is connected to the relay is connected to a position where the relay is connected to the copper bar component 12. Therefore, the two positions may be connected to each other through a single bolt, thereby further reducing the use of components. In addition, an external module may be connected to the copper bar component 12 to be electrically connected to the control plate 31, thereby avoiding wiring harness connection.

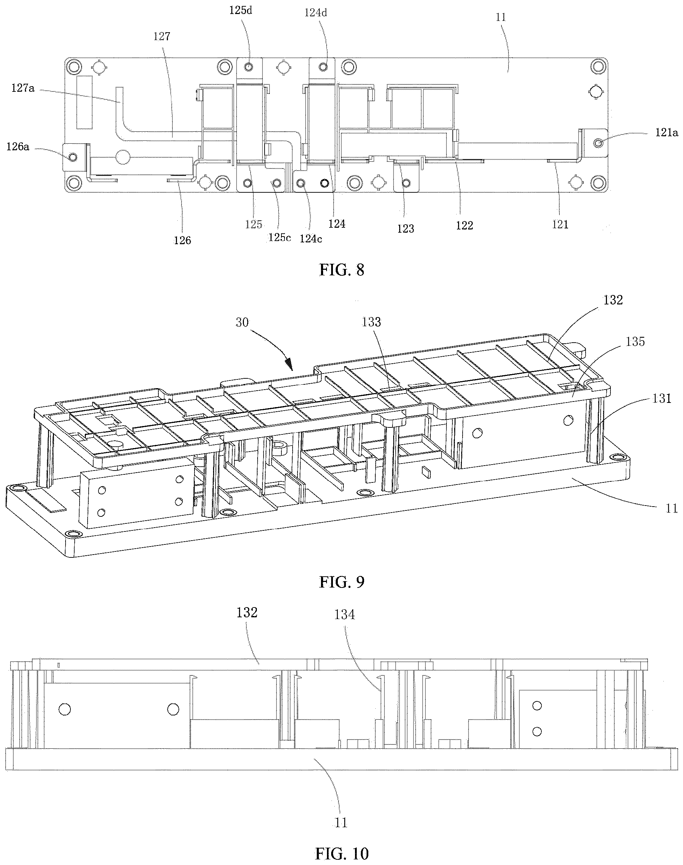

As shown in FIG. 8, the copper bar component 12 includes a seventh connection bar 127 connected to the fourth connection bar 124, and a branch connection point 127a is arranged on the seventh connection bar 127. A power distribution unit (PDU) fuse connection point, a compressor fuse connection point, or a two-in-one fuse connection point, etc. may be arranged on the branch connection point 127a, and may be selected based on actual needs. In this embodiment, one end of the seventh connection bar 127 is located below the fourth connection bar 124, that is, the one end of the seventh connection bar 127 is located further away from the control plate 31 than the fourth connection bar 124, and the one end of the seventh connection bar 127 abuts against the fourth connection bar 124. The other end of the seventh connection bar 127 extends to the position where the fast charging negative relay 212 is located, and the branch connection point 127a is arranged on the other end of the seventh connection bar 127. In some embodiments, the seventh connection bar 127 is embedded on the base 11 to improve compactness.

In some embodiments, a positive connection point 124c of a rear motor and a positive connection point 124d of a range extender are arranged on the fourth connection bar 124, the positive connection point 124c of the rear motor is arranged on one side of the main positive relay 221, and the positive connection point 124d of the range extender is arranged the other side opposite to the one side of the main positive relay 221. A negative connection point 125c of the rear motor and a negative connection point 125d of the range extender are arranged on the fifth connection bar 125, the negative connection point 125c of the rear motor is arranged on one side of the main negative relay 222, and the negative connection point 125d of the range extender is arranged the other side opposite to the one side of the main negative relay 222. In this way, the current new energy pure electric automobile simultaneously adapts to the rear motor (the motor structure is arranged on the one side of the battery) and the range extender (the range extender interface is arranged on the other side opposite to the one side of the battery). In some embodiments, the fourth connection bar 124 includes a first plate body 124a and a second plate body 124b. The first plate body 124a is L-shaped, and one end of the first plate body 124a is connected to the main positive relay 221, and the positive connection point 124c of the rear motor is arranged on the other end of the first plate body 124a. One end of the second plate body 124b is stacked below the positive connection point 124c of the rear motor, that is, the one end of the second plate body 124b is arranged on one side of the positive connection point 124c of the rear motor away from the control plate 31. The other end of the second plate body 124b extends towards the other end of the base 11, that is, the other end of the second plate body 124b is arranged on the base 11 and extends towards the main positive relay 221, and the positive connection point 124d of the range extender is arranged on the other end of the second plate body 124b. In some embodiments, the fifth connection bar 125 includes a third plate body 125a and a fourth plate body 125b. The third plate body 125a is L-shaped. One end of the third plate body 125a is connected to the main negative relay 222, and the negative connection point 125c of the rear motor is arranged on the other end of the third plate body 125a. One end of the fourth plate body 125b is stacked below the negative connection point 125c of the rear motor, that is, the one end of the fourth plate body 125b is arranged on one side of the negative connection point 125c of the rear motor away from the control plate 31. The other end of the fourth plate body 125b extends towards the other end of base 11, that is, the other end of the fourth plate body 125b is arranged on the base 11 and extends towards the main negative relay 222, the fourth plate body 125b extends along the base 11, and the negative connection point 125d range extender is arranged on the other end of the fourth plate body 125b.

As shown in FIGS. 9 to 11, a mounting structure 13 is arranged on the base 11, and the mounting structure 13 is configured to mount the control plate 31. The mounting structure 13 includes a mounting column 131 and a mounting plate 132. The mounting plate 132 is located above the base 11, and the control plate 31 is arranged on the mounting plate 132. One end of the mounting column 131 is connected to the base 11, and the other end the mounting column 131 is connected to the mounting plate 132. Since the mounting plate 132 supports the control plate 31, the control plate 31 has good deformation resistance and is protected from damage, thereby preventing deformation of the control plate 31 during transportation and assembly.

In some embodiments, the mounting plate 132 defines an opening 133 corresponding to the connector 40, such that the end base 41 of the connector 40 may penetrates the mounting plate 132 to be connected to the control plate 31. A hook column 134 is arranged on the base 11 and attached to each relay, and the relay is positioned through the hook column 134.

In some embodiments, the mounting structure 13 includes a metal layer 135 arranged on a periphery of the mounting plate 132. The metal layer 135 is formed by coating metal powder on the periphery of the mounting plate 132, thereby effectively shielding high-voltage interference and reducing an EMC risk. The metal powder may be made of aluminum, copper, or iron, etc., and may be freely selected based on actual needs, as long as the metal powder meets the shielding requirement.

In some embodiments, as shown in FIG. 1, the structure assembly 10 includes a shell component 14. The shell component 14 is arranged outside the control plate 31 to protect the control plate 31 and electronic components of the control plate 31. Along the height direction, a protrusion platform 141 is arranged on the shell component 14 and protrudes form the shell component 14, and the protrusion platform 141 is arranged corresponding to the pre-charging resistor 33 and the pre-charging relay 34, that is, a positive projection of the protrusion platform 141 on the surface where the pre-charging resistor 33 and the pre-charging relay 34 are located covers the pre-charging resistor 33 and the pre-charging relay 34. Therefore, along the height direction, a high-voltage part of the power distribution unit in the Z-direction is effectively covered, thereby protecting electrical safety.

In this embodiment, the control plate 31 adopts a circuit board, and the sampling component 32 is a BMU sampling component 32 integrated on the control plate 31. The hardware circuit assembly 30 is a complete BMS hardware circuit including a MCU (i.e., a motor control unit), a controller area network (CAN) communication, and other electronic circuits, which are not repeated here.

Some embodiments of the present disclosure provide a battery pack including the power distribution management integrated assembly of the battery system in any one of the above embodiments.

Some embodiments of the present disclosure provide an automobile including the power distribution management integrated assembly of the battery system in any one of the above embodiments.

The technical features in the above embodiments may be combined arbitrarily. In order to make the description concise, not all possible combinations of the technical features in the above embodiments have been described. However, as long as there is no contradiction in the combination of these technical features, the combination of these technical features should be considered within the scope of the present disclosure.

The above only describe some embodiments of the present disclosure, and their descriptions are specific and detailed, but should not be understood as limiting the scope of the present disclosure. It should be understood that for those skilled in the art, several modifications and improvements may be made without departing from the concept of the present disclosure, and the several modifications and improvements are within the scope of the present disclosure. Therefore, the scope of the present disclosure is subject to the claims.

## Claims

1. A power distribution management integrated assembly of a battery system, **characterized by** comprising:
a structure assembly (10), comprising a base (11) and a copper bar component (12);
an electrical assembly (20), comprising a fast charging relay assembly (21), a main relay assembly (22), and a fuse (23); the fast charging relay assembly (21), the main relay assembly (22), and the fuse (23) being arranged on the base (11) and all electrically connected to the copper bar component (12); and
a hardware circuit assembly (30), comprising a control plate (31), a sampling component (32), a pre-charging resistor (33), and a pre-charging relay (34); the control plate (31) being arranged on the base (11), and the pre-charging resistor (33) and pre-charging relay (34) being integrated on the control plate (31); the fast charging relay assembly (21), main relay assembly (22), and fuse (23) being all electrically connected to the control plate (31).

2. The power distribution management integrated assembly of the battery system according to claim 1, wherein the structure assembly (10) comprises a connector (40), and the fast charging relay assembly (21), the main relay assembly (22), and the fuse (23) are electrically connected to the control plate (31) through the connector (40).

3. The power distribution management integrated assembly of the battery system according to claim 1, wherein in a height direction, the control plate (31) is located above the electrical assembly (20), and both the fast charging relay assembly (21) and the main relay assembly (22) are horizontal relays.

4. The power distribution management integrated assembly of the battery system according to claim 3, wherein the fast charging relay assembly (21) comprises a fast charging positive relay (211) and a fast charging negative relay (212); the main relay assembly (22) comprises a main positive relay (221) and a main negative relay (222); a coil pin (25) is arranged on one end of each of the fast charging positive relay (211), the fast charging negative relay (212), the main positive relay (221), and the main negative relay (222) close to the control plate (31), and the coil pin (25) is electrically connected to the control plate (31) through the connector (40).

5. The power distribution management integrated assembly of the battery system according to claim 4, wherein the electrical assembly (20) comprises a shunt (24), and the shunt (24) is electrically connected to the copper bar (12) and the control plate (31); a connection point between the fast charging relay assembly (21) and the copper bar component (12), a connection point between the main relay assembly (22) and the copper bar component (12), a connection point between the fuse (23) and the copper bar component (12), and a connection point between the shunt (24) and the copper bar component (12) are all located on one end of the base (11).

6. The power distribution management integrated assembly of the battery system according to claim 5, wherein the copper bar component (12) comprises a first connection bar (121), a second connection bar (122), a third connection bar (123), a fourth connection bar (124), and a fifth connection bar (125); the fuse (23) is connected to the first connection bar (121), a positive electrode connection point (121a) of a battery pack is arranged on the first connection bar (121), the fuse (23) and the main positive relay (221) are both connected to the second connection bar (122), the fast charging positive relay (211) is connected to the third connection bar (123), the main positive relay (221) is connected to the fourth terminal block (124), and the main negative relay (222) is connected to the fifth connection bar block (125);
wherein the copper bar component (12) comprises a sixth connection bar (126), the shunt (24) and the main negative relay (222) are connected to the sixth connection bar (126), and a negative connection point (126a) of the battery pack is arranged on the sixth connection bar (126); the copper bar component (12) comprises a seventh connection bar (127) connected to the fourth connection bar (124), a branch connection point (127a) is arranged on the seventh connection bar (127), and the seventh connection bar (127) is embedded on the base (11); or
a positive connection point (124c) of a rear motor and a positive connection point (124d) of a range extender are arranged on the fourth connection bar (124), the positive connection point (124c) of the rear motor is arranged on one side of the main positive relay (221), and the positive connection point (124d) of the range extender is arranged on another side opposite to the one side of the main positive relay (221); a negative connection point (125c) of the rear motor and a negative connection point (125d) of the range extender are arranged on the fifth connection bar (125), the negative connection point (125c) of the rear motor is arranged on one side of main negative relay (222), and the negative connection point (125d) of the range extender is arranged another side opposite to the one side of the main negative relay (222).

7. The power distribution management integrated assembly of the battery system according to claim 1, wherein a mounting structure (13) is arranged on the base (11), and is configured to mount the control plate (31).

8. The power distribution management integrated assembly of the battery system according to claim 7, wherein the mounting structure (13) comprises an mounting column (131) and an mounting plate (132), the mounting plate (132) is located above the base (11), and the control plate (31) is arranged on the mounting plate (132), one end of the mounting column (131) is connected to the base (11), and the other end of the mounting column (131) is connected to the mounting plate (132).

9. The power distribution management integrated assembly of the battery system according to claim 8, wherein the mounting structure (13) comprises a metal layer (135), and the metal layer (135) is arranged on a periphery of the mounting plate (132).

10. The power distribution management integrated assembly of the battery system according to claim 1, wherein the structure assembly (10) comprises a shell component (14), and the shell component (14) covers the control plate (31).

11. The power distribution management integrated assembly of the battery system according to claim 10, wherein, along a height direction, a protrusion platform (141) is arranged on the shell component (14) and protrudes from the shell component (14), and the protrusion platform (141) is arranged corresponding to the pre-charging resistor (33) and the pre-charging relay (34).

12. The power distribution management integrated assembly of the battery system according to claim 2, wherein the connector (40) comprises an end base (41) and a support leg (42), the support leg (42) is configured to be connected to electrical components, the support leg (42) is connected to the end base (41), and the end base (41) is connected to the control plate (31).

13. The power distribution management integrated assembly of the battery system according to claim 12, wherein the support leg (42) is connected to the end base (41) in a plug-in manner, and at least a part of the support leg (42) is a deformable structure.

14. A battery pack, **characterized by** comprising the power distribution management integrated assembly of the battery system according to any one of claims 1-13.

15. An automobile, **characterized by** comprising the power distribution management integrated assembly of the battery system according to any one of claims 1-13.
